Europäisches Patentamt

(19) European Patent Office

Office européen des brevets

(11) Numéro de publication : **0 286 473 B1**

# (12) FASCICULE DE BREVET EUROPEEN

(45) Date de publication du fascicule du brevet :
19.06.91 Bulletin 91/25

(51) Int. Cl.⁵ : **H04N 5/14**

(21) Numéro de dépôt : **88400591.9**

(22) Date de dépôt : **11.03.88**

(54) **Dispositif et procédé pour le traitement d'images numérisées.**

(30) Priorité : 16.03.87 FR 8703573

(43) Date de publication de la demande :
12.10.88 Bulletin 88/41

(45) Mention de la délivrance du brevet :
19.06.91 Bulletin 91/25

(84) Etats contractants désignés :
DE GB IT SE

(56) Documents cités :
FR-A- 1 509 083
FR-A- 2 333 319
IBM TECHNICAL DISCLOSURE BULLETIN,
vol. 19, no. 3, août 1976, pages 1094,1095, New
York, US; T.H. MORRIN: "Contour coding of
black/white images without recursion"

(73) Titulaire : **Office National d'Etudes et de
Recherches Aérospatiales (O.N.E.R.A.)
29 Avenue de la Division Leclerc
F-92320 Châtillon-sous-Bagneux (FR)**

(72) Inventeur : **Appel, Jean
9, rue Auguste Comte
F-92170 Vanves (FR)**

(74) Mandataire : **Plaçais, Jean-Yves et al
Cabinet Netter, 40, rue Vignon
F-75009 Paris (FR)**

EP 0 286 473 B1

## Description

La présente invention concerne un procédé pour le traitement d'images numérisées, en vue notamment de leur lecture rapide et/ou de leur compression. L'invention s'applique à l'analyse d'images échantillonnées par une mosaïque de photodétecteurs et stockées, après numérisation, dans une mémoire.

En mémoire, une image peut être définie par une matrice de pixels possédant N lignes et P colonnes. Dans certains cas, l'image échantillonnée et numérisée est représentée par une suite de 0 et de 1 rangés en lignes et en colonnes dans la matrice et le dispositif proposé permet alors de localiser directement les cellules de la mémoire contenant un 1 (ou un 0).

D'une façon générale, l'analyse d'une telle image numérisée s'effectue par une lecture séquentielle de la mémoire matricielle, avec, pour chaque pixel, exécution d'un test qui détermine s'il satisfait une condition prédéterminée. On dira dans la suite qu'un pixel est "excité" s'il satisfait la condition, car celle-ci porte en général sur le fait que le pixel est ou non considéré comme éclairé.

Une telle lecture séquentielle conduit inéluctablement à explorer toute la mémoire, même si le nombre de pixels excités est faible devant le nombre total des pixels de la mémoire. Il en résulte une perte de temps limitant considérablement la vitesse de lecture de l'image.

L'invention a pour but d'apporter une solution à ce problème. A cette fin, elle propose un dispositif permettant de ne traiter que les informations utiles, les pixels excités d'une mémoire matricielle.

L'invention porte sur un dispositif pour le traitement d'images numérisées du type comprenant :
— une mémoire matricielle de pixels répartis en N lignes et P colonnes et,
— des moyens de traitement pour déterminer, par lecture de la mémoire, les pixels à l'état excité.

Selon une définition générale de l'invention, les moyens de traitement opèrent en déterminant et mémorisant les adresses des pixels excités occupant un rang extrême en ligne ou en colonne, en faisant passer ces pixels à l'état non excité et en réitérant ces opérations jusqu'à ce qu'aucun des pixels ne soit excité.

Plus particulièrement, les moyens de traitement comprennent :
— N codeurs de priorité reliés aux sorties des N lignes de la mémoire matricielle et, déterminant chacun, pour la ligne dont il a la charge, l'existence d'au moins un pixel excité et l'adresse de colonne du pixel excité extrême de cette ligne,
— une mémoire de sortie propre à stocker, sur commande, les adresses de colonne ainsi déterminées pour chaque ligne,
— N moyens décodeurs d'adresse de colonne reliés aux sorties d'adresses des N codeurs de priorité et propres à commander le changement d'état des pixels possédant lesdites adresses extrêmes,
— des moyens de commande à deux états alternés permettant, respectivement, le stockage des adresses en mémoire de sortie puis le changement d'état des pixels, jusqu'à ce que les N codeurs de priorité n'indiquent plus aucun pixel excité, et
— un codeur de priorité complémentaire recevant les sorties d'existence de pixels excités des N codeurs de priorité, pour en tirer l'existence d'un pixel excité en général, pour les moyens de commande, ainsi que l'adresse de ligne extrême parmi celles des N codeurs de priorité qui ont un pixel à l'état excité, cette adresse de ligne étant appliquée à la mémoire de sortie.

Selon une autre caractéristique de l'invention, le dispositif comporte :
— N portes à trois états dont les entrées sont respectivement reliées aux sorties d'adresse des N codeurs de priorité, et dont les sorties sont reliées en commun à une entrée de la mémoire de sortie, recevant les adresses de colonne, et
— un moyen décodeur complémentaire, pour les adresses de ligne, validant la porte à trois états associée.

Selon un mode de réalisation préféré du dispositif de l'invention, le moyen décodeur d'adresse de ligne complémentaire comprend N comparateurs respectivement associés aux N moyens décodeurs d'adresse de colonne.

Selon un aspect particulier de l'invention, chacun des N décodeurs d'adresse de colonne est validé par une porte ET recevant conjointement un signal issu des moyens de commande et la sortie concernée du moyen décodeur complémentaire pour les adresses de ligne.

L'invention a également pour objet un procédé pour le traitement d'images numérisées, qui comprend les étapes suivantes :
— a) on stocke des données numérisées dans une mémoire matricielle de pixels répartis en N lignes et P colonnes,
— b) on détermine et on mémorise les adresses des pixels excités occupant un rang extrême en ligne ou en colonne, on fait passer ces pixels à l'état non excité et on réitère ces opérations jusqu'à ce qu'aucun des pixels ne soit excité,
— c) on établit l'image des pixels excités à partir des données mémorisées.

D'autres caractéristiques et avantages de l'invention apparaîtront à l'examen de la description détaillée ci-après, et des dessins annexés sur lesquels :
— la figure 1 est une vue schématique d'un mode de réalisation préféré du dispositif selon l'invention ;
— la figure 2 comprend des chronogrammes illustrant le fonctionnement du dispositif selon l'invention ; et

– la figure 3 est une vue schématique illustrant une application particulière de l'invention.

Les dessins annexés comportent à de nombreux titres des éléments de caractère certain. Ils pourront donc non seulement servir à éclairer la description ci-après, mais aussi contribuer à la définition de l'invention, le cas échéant.

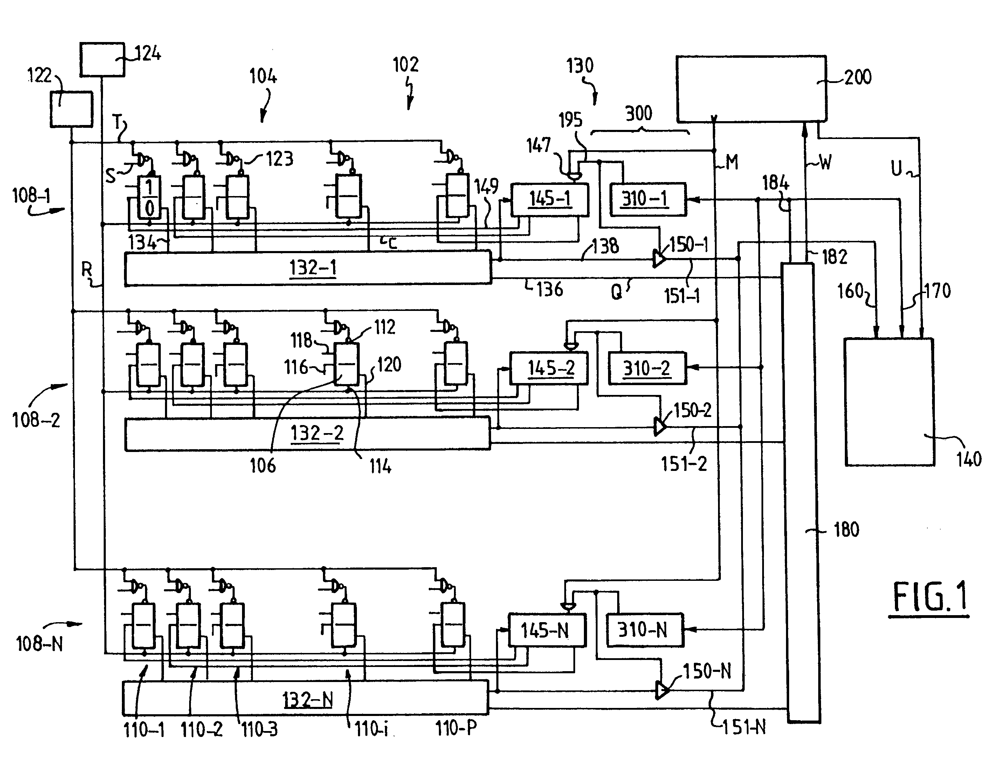

Sur la figure 1, un dispositif 102 conforme à l'invention comprend une mémoire matricielle 104 de pixels 106 répartis en N lignes 108 individualisées en 108-1, 108-2,..., 108-N, et P colonnes 110 individualisées en 110-1, 110-2,..., 110-P. Pour simplifier le dessin, sont seules représentées les lignes 108-1, 108-2 et 108-N et les colonnes 110-1, 110-2, 110-3, 110-I et 110-P.

Chaque pixel 106 est ici mémorisé dans un élément bistable du type bascule D. Ces bascules comportent chacune une première entrée 112 de forçage à l'état 1 ("preset"), une seconde entrée de forçage à l'état 0 ("clear"), une troisième entrée 116 d'horloge, une quatrième entrée 118 de "donnée" et une sortie 120.

Un circuit de commande d'entrée 122 délivre un signal d'autorisation d'entrée T appliqué à des portes NON ET 123. Sur leur seconde entrée, ces portes 123 reçoivent individuellement un signal S dont le niveau logique est 1 ou 0 suivant que le pixel associé est excité ou non.

Un moyen de remise à zéro générale 124 délivrant un signal R propre à désexciter les pixels 106 est relié à chaque entrée 114. Les entrées 114 sont actives quand on y place un niveau 0 logique. C'est par conséquent lorsque le signal R issu du moyen 124 est placé au niveau 0 logique que la remise à zéro générale est effectuée.

Les entrées 118 sont placées à un niveau 0 logique. Elles seront prises en compte sur une impulsion d'horloge en 116 comme on le verra plus loin.

Le dispositif 102 comprend des moyens de traitement 130 pour déterminer ceux des pixels 106 qui possèdent un état excité.

Les moyens de traitement 130 comprennent N codeurs de priorité 132 individualisés en 132-1, 132-2,..., 132-N, N décodeurs d'adresse de colonne 145 individualisés de même, un codeur de priorité complémentaire 180, et un décodeur d'adresse complémentaire 300, avantageusement constitué de N comparateurs 310.

Chacun des codeurs de priorité 132 comprend P entrées 134 respectivement reliées aux sorties 120 des bascules 106 d'une ligne 108 dont il a la charge. Dans cette forme de réalisation de l'invention, seules sont à 0 les sorties 120 relatives à des pixels excités. Le codeur de priorité indique le numéro de celles des sorties 120 à "0" logique dont le rang est le plus élevé (ou le moins élevé, en variante). Ce numéro est ici une adresse de colonne.

De préférence, chaque codeur de priorité 132 comprend une première sortie 136 délivrant un signal Q propre à indiquer si au moins un pixel parmi les P pixels de la ligne dont il a la charge est excité. Sa seconde sortie 138 indique l'adresse de colonne du pixel excité extrême de ladite ligne.

Les N moyens décodeurs d'adresse de colonne 145 individualisés en 145-1, 145-2,..., 145-N sont reliés aux secondes sorties 138 des N codeurs de priorité 132.

Les N sorties 138 des codeurs de priorité 132 sont respectivement appliquées à N portes à trois états 150 individualisées en 150-1, 150-2,..., 150-N associées chacune à une ligne 108.

Les sorties 151 des portes 150 sont reliées en commun à une première entrée 160 de la mémoire de sortie 140. Celle des portes 150 qui conduit fournit des signaux numériques d'adresse de colonne d'un pixel excité, pour stockage dans la mémoire 140.

Le codeur de priorité complémentaire 180 reçoit les premières sorties 136 (existence de pixels excités) des N codeurs de priorité 132. Il est nommé "complémentaire" car il opère sur les lignes, alors que les N codeurs 132 opèrent sur les colonnes.

Le codeur de priorité complémentaire 180 comporte une première sortie 182 délivrant un signal W, qui indique au moyen de commande 200 l'existence d'un pixel 106 excité sur l'ensemble de la mémoire 104.

Il comporte aussi une seconde sortie 184 reliée à la seconde entrée 170 de la mémoire de sortie 140. Cette seconde sortie 184 définit l'adresse de ligne la plus élevée parmi celles des N codeurs de priorité 132 qui possèdent une sortie 136 active, c'est-à-dire qui manifestent un pixel 106 excité. La seconde sortie 184 est aussi reliée à un moyen décodeur complémentaire 300 pour les adresses de ligne, propre à valider la porte à trois états 150 associée.

Le décodeur d'adresses de ligne complémentaire 300 comprend ici N comparateurs 310-1 à 310-N dont les valeurs numériques de référence correspondent respectivement aux N décodeurs d'adresse de colonne 145.

Chacun des N décodeurs d'adresse de colonne 145 est excité par une porte ET 147 recevant conjointement un signal M issu du moyen de commande 200 et la sortie 195 du comparateur 310 associé.

Chacun des N décodeurs d'adresses de colonne 145 comprend P sorties 149 reliées respectivement aux P entrées "horloge" 116 des P bascules 106 de la ligne 108 associée.

Pour chaque décodeur 145, une et une seule de ses sorties, définie par l'adresse d'entrée décodée, fournit un signal d'horloge C. Il s'agit de l'adresse la plus élevée de pixel excité dans la ligne 108 considérée. A la fin du signal d'horloge C, la bascule concernée, qui reçoit un signal "0" sur son entrée D 118, va retourner à l'état "0", ce qui "désexcite" le pixel intéressé.

Les moyens de traitement 130 comprennent ensuite des moyens de commande 200 possédant deux états alternés U et M permettant respectivement le stockage en mémoire de sortie 140 puis le changement d'état des pixels 106, jusqu'à ce que les N codeurs de priorité 132 n'indiquent plus aucun pixel excité.

Le codeur complémentaire de priorité 180 indique celle des lignes 136 qui possède le rang le plus élevé et indique sur la ligne W un pixel excité. L'indication en question est une adresse de ligne, apparaissant sur la liaison 184. Celui des comparateurs 310 qui est concerné valide la porte 150 associée. La ligne 160 transmet alors à la mémoire 140 l'adresse de colonne du pixel excité, tandis que son adresse de ligne arrive à la mémoire par la liaison 184 et 170. A l'état M suivant, le décodeur 145 concerné efface le pixel excité, qui vient d'être mémorisé en 140.

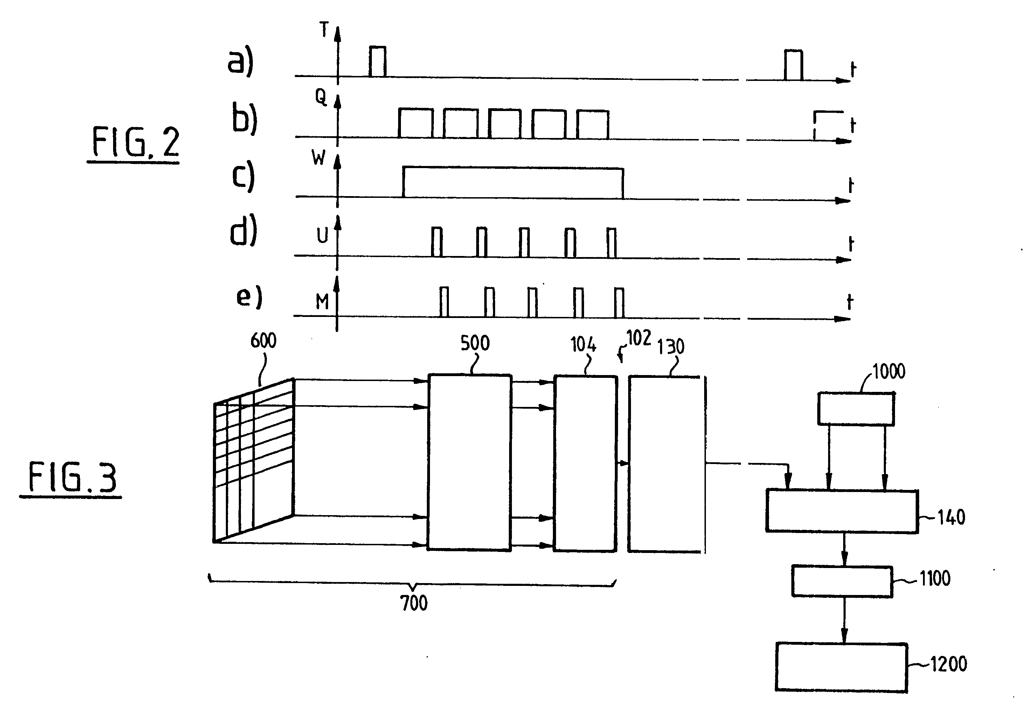

Le fonctionnement du dispositif va maintenant être expliqué en plus de détails à l'aide des chronogrammes des figures 2a à 2e. Pour simplifier, on ne considérera qu'une seule ligne, que l'on supposera être celle de la priorité la plus élevée, pour le codeur 180.

La figure 2a représente le signal T appliqué sur l'entrée 112 des bascules 106 pour autoriser ces dernières à recevoir un nouvel état de pixel sur leurs entrées S respectives. Les bascules commutent sur le front montant du signal T.

La figure 2b représente le signal Q délivré par la sortie 136 de l'un des codeurs de priorité 132. Ce signal Q indique si au moins un pixel parmi les P pixels de la ligne dont le codeur de priorité 132 a la charge est excité. Le codeur de priorité complémentaire 180 reçoit le signal Q.

La figure 2 c représente le signal W délivré par la sortie 182 du codeur de priorité complémentaire 180. Le signal W indique aux moyens de commande 200, l'existence d'un pixel excité en général. Le codeur de priorité complémentaire 180 détermine et transmet l'adresse de ligne extrême parmi celles des N codeurs de priorité 132 qui manifestent un pixel excité, à la mémoire de sortie 140 ainsi qu'au moyen de décodeur d'adresse de ligne complémentaire 310 pour que ce dernier valide la porte 150 à trois états associée, ce qui permet de transmettre l'adresse de colonne extrême à la mémoire de sortie 140.

La figure 2d représente le signal U délivré par le moyen de commande 200 et permettant la mise en mémoire de sortie des adresses de lignes et de colonnes des pixels excités.

La figure 2e représente le signal M délivré par le moyen de commande 200 en présence du signal W. Ce signal M valide le décodeur d'adresse de colonne 145 adressé par le décodeur d'adresse de ligne complémentaire 310, ce qui permet via le signal C décrit en référence à la figure 1 de faire passer le pixel mémorisé à l'état non excité.

En présence du signal W, les opérations de détermination de pixels excités et leur mémorisation dans la mémoire de sortie (140) sont réitérées.

Le dispositif de l'invention réalise ainsi les étapes suivantes :

– a) on stocke des données numérisées dans une mémoire matricielle de pixels répartis en N lignes et P colonnes,

– b) on détermine et on mémorise les adresses des pixels excités possédant un rang extrême en ligne ou colonne, on fait passer ces pixels à l'état non excité et on réitère ces opérations jusqu'à ce qu'aucun des pixels ne soit excité. L'image des seuls pixels excités peut alors être établie à partir des données mémorisées.

L'invention s'applique à l'analyse d'images fournies par un système imageur ou synthétisées par un calculateur.

Sur la figure 3, on a représenté schématiquement une application de l'invention à l'analyse d'une image formée sur une mosaïque de photodétecteurs individuels.

Les données numérisées proviennent d'une mosaïque de photoconducteurs 600 répartis en N lignes et P colonnes. Ces photoconducteurs 600 sont par exemple activés par le rayonnement lumineux émis par des objets lumineux et mobiles (non représentés) dont on veut obtenir rapidement une image comprimée, en vue de déterminer, en temps réel, leurs positions spatiales.

Les photoconducteurs 600 sont couplés à un dispositif électronique 500 de conversion analogique-numérique qui transforme les signaux analogiques des photoconducteurs en données numérisées sur un bit.

Ce convertisseur 500 est couplé à la mémoire matricielle 104 de pixels selon l'invention. L'ensemble des éléments 600, 500 et 104 constitue une mémoire optoélectronique matricielle 700, contenant donc une suite de 1 et de 0 rangés ligne par ligne.

Les moyens de traitement 130 du dispositif 102 de l'invention déterminent par lecture de la mémoire 104, ceux des pixels qui possèdent un état excité, mémorisent les pixels excités occupant un rang extrême en ligne ou en colonne dans une mémoire de sortie 140, font passer ces pixels à l'état non excité et réitèrent ces opérations jusqu'à ce qu'aucun des pixels ne soit excité.

La mémoire de sortie 140 stocke les coordonnées des photoconducteurs 600 associés aux pixels via le dispositif électronique 500 et reçoit, par exemple, des paramètres 1000 relatifs aux objets lumineux mobiles activant les photoconducteurs 600. Ces paramètres peuvent être d'origine externe, ou bien déterminés par suivi des objets, à l'aide du calculateur 1100 mentionné ci-après.

Ces paramètres 1000 sont, par exemple, la vitesse des objets mobiles et la distance séparant lesdits objets des photoconducteurs 600.

Les coordonnées des photoconducteurs associées aux pixels excités et les paramètres relatifs aux objets lumineux sont transmis à un calculateur 1100 qui peut ainsi traiter des images comprimées représentant les objets lumineux mobiles, et les afficher sur une console de visualisation 1200.

On peut remarquer que la lecture des photoconducteurs 600 associés aux pixels 104 dépend du câblage réalisé entre la mémoire matricielle 104 et les moyens de traitement 130. On peut donc privilégier une direction ou une zone de lecture des photoconducteurs 600 en fonction de la probabilité d'apparition des objets lumineux mobiles.

La présente invention offre de nombreux avantages :

– les éléments essentiels et constitutifs du dispositif de l'invention sont d'une mise en oeuvre simple et facile ;

– le système fonctionne à partir d'une logique combinatoire ce qui permet d'obtenir une bonne fiabilité de fonctionnement ;

– le dispositif décrit en référence à la figure 1 est utilisable pour des images de grande dimension car les circuits utilisés sont cascadables ;

– les éléments essentiels constitutifs du dispositif de l'invention peuvent être fabriqués en série et sous la forme de circuits intégrés ;

– la compression des données numériques permet de nombreuses applications, notamment une application radar ou sonar.

## Revendications

1. Dispositif pour le traitement d'images numérisées du type comprenant une mémoire matricielle (104) de pixels (106) répartis en N lignes (108) et P colonnes (110), et des moyens de traitement (130) pour déterminer, par lecture de la mémoire (104), les pixels (106) à l'état excité, caractérisé en ce que les moyens de traitement (130) opèrent en déterminant et mémorisant les adresses des pixels (106) excités occupant un rang extrême en ligne ou en colonne, en faisant passer ces pixels (106) à l'état non excité et en réitérant ces opérations jusqu'à ce qu'aucun des pixels (106) ne soit excité.

2. Dispositif selon la revendication 1, caractérisé en ce que les moyens de traitement (130) comprennent :

– N codeurs de priorité (132) reliés aux sorties des N lignes de la mémoire matricielle et déterminant chacun, pour la ligne (108) dont il a la charge, l'existence d'au moins un pixel (106) excité et l'adresse de colonne du pixel excité extrême de cette ligne (108),

– une mémoire de sortie (140) propre à stocker les adresses de colonne ainsi déterminées pour chaque ligne,

– N moyens décodeurs d'adresses de colonne (145) reliés aux sorties d'adresses des N codeurs de priorité (132) et propres à commander le changement de l'état des pixels possédant lesdites adresses extrêmes,

– des moyens de commande (200) à deux états alternés U et M permettant, respectivement, le stockage des adresses en mémoire de sortie (140) puis le changement d'état des pixels (106), jusqu'à ce que les N codeurs de priorité (132) n'indiquent plus aucun pixel (106) excité, et

– un codeur de priorité complémentaire (180) recevant les sorties d'existence de pixels excités des N codeurs de priorité (132), pour en tirer l'existence d'un pixel excité en général, pour les moyens de commande (200), ainsi que l'adresse de ligne extrême parmi celles des N codeurs de priorité (132) qui ont un pixel à l'état excité, cette adresse de ligne étant appliquée à la mémoire de sortie (140).

3. Dispositif selon la revendication 2, caractérisé en ce qu'il comporte :

– N portes à trois états (150) dont les entrées sont respectivement reliées aux sorties d'adresse des N codeurs de priorité, et dont les sorties sont reliées en commun à une entrée de la mémoire de sortie (140) recevant les adresses de colonne ; et

– un moyen décodeur complémentaire (300), pour les adresses de ligne, validant la porte en trois états associée.

4. Dispositif selon la revendication 3, caractérisé en ce que le moyen décodeur d'adresse de ligne complémentaire (300) comprend N comparateurs (310) respectivement associés aux N moyens décodeurs d'adresse de colonne (145).

5. Dispositif selon la revendication 3 ou 4, caractérisé en ce que chacun des N décodeurs d'adresse de colonne (145) est validé par une porte ET (147) recevant conjointement un signal M issu des moyens de commande (200) et la sortie (195) concernée du moyen décodeur complémentaire (310) pour les adresses de ligne.

6. Dispositif selon l'une quelconque des revendications 1 à 5, caractérisé en ce que les pixels (106) sont des éléments bistables dont l'état excité est commandé par un moyen générateur (122) et dont l'état non excité est commandé par un moyen de remise à zéro générale (124).

7. Dispositif selon la revendication 6, caractérisé en ce que des éléments bistables (106) sont du type bascule D.

8. Dispositif selon l'une quelconque des revendications 1 à 7, caractérisé en ce que les images numérisées sont fournies par une mémoire optoélectronique constituée d'une mosaïque de photodétecteurs (600) et d'un dispositif de conversion analogique numérique (500) transformant les signaux analogiques échantillonnés par les photodétecteurs en pixels numérisés, stockés dans la mémoire matricielle (104).

9. Procédé pour le traitement d'images numérisées, caractérisé en ce qu'il comprend les étapes suivantes :

- a) on stocke des données numérisées dans une mémoire matricielle de pixels répartis en N lignes et P colonnes,
- b) on détermine et on mémorise les adresses des pixels excités occupant un rang extrême en ligne ou en colonne, on fait passer ces pixels à l'état non excité et on réitère ces opérations jusqu'à ce qu'aucun des pixels ne soit excité,
- c) on établit l'image des pixels excités à partir des données.

**Ansprüche**

1. Vorrichtung zur Verarbeitung digitaler Bilder, mit einem Matrixspeicher (104) für Pixel (106-Bildpunkte), der in N Zeilen (108) und P Spalten (110) unterteilt ist, und einer Verarbeitungseinrichtung (130), die durch Lesen aus dem Speicher (106) die sich in einem angeregten Zustand befindenden Pixel (106) bestimmt, dadurch gekennzeichnet, daß die Verarbeitungseinrichtung (130) die Adressen der angeregten Pixel, die einen extremen Wert in der Zeile oder der Spalte besitzen, bestimmt und speichert, diese Pixel (106) in einen nicht-angeregten Zustand überführt und diese Operationen solange wiederholt, bis kein Pixel (106) mehr angeregt ist.

2. Vorrichtung nach Anspruch 1, dadurch gekennzeichnet, daß die Verarbeitungseinrichtung (130) aufweist :

- N Prioritätskodierer (132), die an den Ausgängen der N Zeilen des Matrixspeichers angeschlossen sind und die in jeder angeschlossenen Zeile (108) ein Vorhandensein mindestens eines angeregten Pixels (106) und die Spaltenadresse des äußersten in dieser Zeile (108) angeregten Pixels bestimmt,
- einen Ausgangsspeicher (140), der die Adressen der so für jede Zeile bestimmten Spalte speichern kann,
- N Spaltenadressen-Dekodiervorrichtungen (145), die an die Ausgänge der Adressen der N Prioritätskodierer (132) angeschlossen sind und die die Änderung des Zustandes der Pixel steuern können, die die genannten extremen Adressen aufweisen,
- eine Steuereinrichtung (200) mit zwei abwechselnden Zuständen U und M, die die Speicherung der Adressen im Ausgangsspeicher (140) und dann die Änderung der Zustände der Pixel (106) zulassen, bis die N Prioritätskodierer (132) keinen angeregten Pixel (106) mehr anzeigen, und

- einen zusätzlichen Prioritätskodierer (180), der die Ausgänge hinsichtlich des Vorhandenseins von angeregten Pixeln der N Prioritätskodierer (132) empfängt, um für die Steuereinrichtung (200) das Vorhandensein zumindest eines angeregten Pixels sowie die extreme Zeilenadresse unter denen der N Prioritätskodierer (132), die einen Pixel in angeregtem Zustand haben, zu erhalten, wobei diese Zeilenadresse dem Ausgangsspeicher (140) zugeführt wird.

3. Vorrichtung nach Anspruch 2, gekennzeichnet durch :

- N Gatter mit drei Zuständen (150), deren Eingänge jeweils an Adressausgängen der n Prioritätskodierer angeschlossen sind und deren Ausgänge zusammen an einen Eingang des Ausgangsspeichers (140), der die Spaltenadresse empfängt, angeschlossen sind, und
- eine zusätzliche Dekodiereinrichtung (300) für die Zeilenadressen, die das angeschlossene Gatter mit drei Zuständen aktiviert macht.

4. Vorrichtung nach Anspruch 3, dadurch gekennzeichnet, daß die zusätzliche Zeilenadressen-Dekodiereinrichtung (300) N Vergleicher (310) aufweist, die jeweils an N Spaltenadressen-Dokodiereinrichtungen (145) angeschlossen sind.

5. Vorrichtung nach Anspruch 3 oder 4, dadurch gekennzeichnet, daß jeder der N Spaltenadressen-Dekodierer (145) durch ein UND-Gatter (147) aktiviert wird, das sowohl ein von der Steuereinrichtung (200) abgegebenes Signal M als auch den zugehörigen Ausgang (195) der zusätzlichen Zeilenadressen-Dekodiereinrichtung (310) empfängt.

6. Vorrichtung nach einem der Ansprüche 1 bis 5, dadurch gekennzeichnet, daß die Pixel (106) bistabile Elemente sind, deren angeregter Zustand von einer Generatoreinrichtung (122) gesteuert ist und deren nicht-angeregter Zustand von einer Vorrichtung (124) zum Rücksetzen auf im wesentlichen Null gesteuert ist.

7. Vorrichtung nach Anspruch 6, dadurch gekennzeichnet, daß die bistabilen Elemente (106) D-Flip-FLops sind.

8. Vorrichtung nach einem der Ansprüche 1 bis 7, dadurch gekennzeichnet, daß die digitalen Bilder durch einen opto-elektronischen Speicher geliefert werden, der von einer Anordnung von Photodetektoren (600) und von einer Einrichtung zur analog-digital Umsetzung (500) gebildet ist, die die analogen, durch die Photodetektoren aufgenommenen Signale in digitale Pixel zur Speicherung in dem Matrixspeicher (104) umsetzt.

9. Verfahren zur Verarbeitung von digitalen Bildern, gekennzeichnet durch die folgenden Schritte :

a) man speichert digitale Daten in einem Matrixspeicher für Pixel, der in N Zeilen und P Spalten unterteilt ist,

b) man bestimmt und man speichert die Adressen der angeregten Pixel, die in der Zeile oder der Spalte einen extremen Wert besitzen, man überführt diese Pixel in den nicht-angeregten Zustand und man wiederholt diese Operationen solange, bis kein Pixel mehr angeregt ist,

c) man erzeugt das Bild der angeregten Pixel ausgehend von den Daten.

## Claims

1. Device for processing digital images of the type comprising a matrix memory (104) for pixels (106) distributed in N lines (108) and P columns (110), and processing means (130) for determining, by reading the memory (104), the pixels (106) in the energised state, characterised in that the processing means (130) operate by determining and storing the addresses of the energised pixels (106) occupying an extreme position in a line or a column, changing these pixels (106) into the non energised state and repeating these operations until none of tie pixels (106) is energised.

2. Device according to claim 1, characterised in that the processing means (130) comprise :

   – N priority coders (132) connected to the outputs of the N lines of the matrix memory and each determining, for the line (108) of which they have charge, the existence of at least one energised pixel (106) and the column address of the extreme energised pixel in this line (108) ;

   – an output memory (140) capable of storing the column address thus determined for each line ;

   – N column address decoder means (145) connected to the address outputs of the N priority coders (132) and capable of controlling the change of state of the pixels having the said extreme addresses ;

   – control means (200) with two alternate states U and M respectively enabling the addresses to be stored in the output memory (140) and the pixels (106) to change state, until the N priority coders (132) no longer indicate any energised pixels (106) ; and

   – an additional priority coder (180) receiving the outputs of the existence of the energised pixels from the N priority coders (132), in order to extract therefrom the existence of an energised pixel in general, for the control means (200), as well as the extreme line address from among those N priority coders (132) having a pixel in the energised state, this line address being applied to the output memory (140).

3. Device according to claim 2, characterised in that it comprises :

   – N tristate gates (150) the inputs of which are connected respectively to the address outputs of the N priority coders and the outputs of which are connected jointly to an input of the output memory (140) receiving the column addresses ; and

   – an additional decoder means (300) for the line addresses enabling the associated tristate gate.

4. Device according to claim 3, characterised in that the additional line address decoder means (300) comprises N comparators (310) associated respectively with N column address decoder means (145).

5. Device according to claim 3 or 4, characterised in that each of the N column address decoders (145) is enabled by an AND gate (147) jointly receiving a signal M from the control means (200) and the output (195) in question from the additional decoder means (310) for the line addresses.

6. Device according to any one of claims 1 to 5, characterised in that the pixels (106) are bistable components of which the energised state is controlled by a generator means (122) and of which the non-energised state is controlled by a general zeroing means (124).

7. Device according to claim 6, characterised in that the bistable elements (106) are D-type flip-flops.

8. Device according to any one of claims 1 to 7, characterised in that the digital images are provided by an optoelectronic memory comprising a mosaic of photodetectors (600) and an analog-digital conversion device (500) converting the analog signals sampled by the photodetectors into digital pixels stored in the matrix memory (104).

9. Method for processing digital images, characterised in that it comprises the following stages :

   – a) digital data are stored in a matrix memory for pixels distributed in N lines and P columns ;

   – b) the addresses of the energised pixels occupying an extreme position in a line or column are determined and memorised, these pixels are changed into the non-energised state and these operations are repeated until none of the pixels is energised ;

   – c) an image of the energised pixels is prepared on the basis of the data.

FIG.1

EP 0 286 473 B1

8

FIG.2

a) T

b) Q

c) W

d) U

e) M

FIG.3

600  500  104  102 130  700  1000  140  1100  1200